# EUROPÄISCHE PATENTANMELDUNG

(11) **EP 1 726 364 A2**
(43) Veröffentlichungstag der Anmeldung: **29.11.2006**
(21) Anmeldenummer: 06010153.2
(22) Anmeldetag: 17.05.2006
(51) Int. Cl.: B02C 13/31, B02C 23/04, B02C 23/08, B02C 23/18, B02C 21/00, B23Q 11/00, C22B 1/00, B03D 1/008, B03D 1/02

(54) **Verfahren zur Zerkleinerung von Metallspänegemischen und zur legierungsspezifischen Rückgewinnung der Metallspäne**

(30) Priorität: 21.05.2005 DE 102005023525
(71) Anmelder: Kali-Umwelttechnik GmbH, 99706 Sondershausen (DE)
(72) Erfinder: Bach, Jürgen, 99706 Sondershausen (DE); Schultheis, Bernd, Dr., 99706 Hachelbich (DE); Becker, Karl-Heinz, Dr., 52066 Aachen (DE); Wotruba, Hermann, Prof. Dr., 52074 Aachen (DE)

(57) **Zusammenfassung**

Die Erfindung betrifft eine Methode zur Zerkleinerung von Metallspänen oder Gemischen aus Metallspänen und zur Zerkleinerung von Presslingen aus Metallspänen mit der Zielsetzung in einem nachfolgenden Separationsverfahren legierungsspezifisch die Materialien mit hoher Reinheit zurück zu gewinnen.

## Beschreibung

Die Erfindung betrifft ein Verfahren, mit dem Gemische aus Metallspänen unterschiedlicher Zusammensetzung oder Metallspäne, die mit sonstigen Feststoffen verunreinigt sind, auch solche, die durch vorheriges Verpressen in beliebig geformten Körper vorliegen, im Folgenden als Presslinge bezeichnet, mit einer Methode der Prallzerkleinerung und unter Verwendung von nicht brennbaren Flüssigkeiten als Hilfsmittel soweit zerkleinert werden, dass das Zerkleinerungsgut durch Sortierung, z. B. Dichtesortierung, Magnetsortierung und/oder Siebklassierung, in unterschiedliche Fraktionen aufgeteilt und dadurch eine legierungsspezifische Rückgewinnung des Spänematerials möglich wird.

Zur sortenreinen Rückgewinnung von metallischem Spänematerial ist es erforderlich, dass Einzelspäne mechanisch von einander getrennt vorliegen und der jeweilige Einzelspan einheitlich aus einem Material besteht. Dann kann man durch Ausnutzung von nicht zu kleinen Dichteunterschieden der voneinander zu separierenden Materialien ein mindestens im Bezug auf die Hauptkomponente der Legierungen sortenreines Separationsverfahren durchführen. Die legierungsspezifische Rückgewinnung der Metallspäne ist entsprechend dieser Zielsetzung zu verstehen.

Bei unverpressten Spänen oder Spänegemischen steht einer Separation oft die Spanform entgegen, da diese dazu führen kann, dass sich einzelne Späne unterschiedlicher Zusammensetzung verhaken und deshalb eine Dichtesortierung mit hinreichender Trennschärfe nicht möglich ist. Liegen die Spänegemische als Presslinge vor, dann ist die Notwendigkeit einer Zerkleinerung für die Separation zwingend erforderlich. Eine Zerkleinerung dient dazu, Späne in unverpresster oder verpresster Form soweit mechanisch zu beanspruchen, dass sowohl hinsichtlich der Form als auch im Bezug auf die Legierungskomponenten ein vollständiger Aufschluss vorliegt. Jedoch kann eine nicht optimale Zerkleinerungsmethode zu einer Verminderung des Aufschlussgrades führen.
- Es können sich durch Plattierung und Verkugelung Agglomerate bilden.
- Einzelspäne können durch eine ungünstige Verformung anderer Späne eingeschlossen werden.

Beide Effekte erschweren die nachfolgende Separation.

Bei der Verwendung schnell laufender Zerkleinerungsmaschinen ist zu beachten, dass Funken gebildet werden, die bei leicht entzündlichen Metalllegierungen wie z. B. Magnesiumlegierungen zu Bränden, sowie zu Verpuffungen oder Explosionen führen können. Das ist ein beträchtliches Sicherheitsrisiko bei der legierungsspetzifischen Rückgewinnung der Metallspäne.

Eine mahlende Zerkleinerung der Späne oder Späne-Presslinge, zum Beispiel in Wälzmühlen oder Kugelmühlen scheidet aus, da diese Zerkleinerungsmethode partiell mit einer Plattierung der Metalle einhergeht. Auch eine schneidende Zerkleinerungsmethode löst die Aufgabe nicht umfassend, da die unterschiedlichen Brucheigenschaften verschiedener Materialien nicht zum Tragen kommen können und das zu zerkleinernde Gut unabhängig vom Material mit einem einheitlichen Zerkleinerungsgrad zerkleinert wird. Zudem kann es zu ungünstigen Verformungen der Späne im Zerkleinerungsgut kommen, die zu Materialeinschlüssen oder zu einem Verhacken der Einzelspäne und deshalb zu einem unbefriedigenden Trennergebnis führen. Im technischen Einsatz übliche Prallzerkleinerer sind schnell laufende Maschinen und erfüllen wegen der Gefahr der Staubbildung und der oben genannten Brand- und Explosionsgefährdung beim Verarbeiten entzündlicher Metalle die Aufgabe ebenfalls nicht vollends.

Überaschenderweise hat sich herausgestellt, dass die genannten ungünstigen Effekte und Risiken bei Verwendung einer, mit einer nicht brennbaren Flüssigkeit beaufschlagten Hammer- oder Prallmühle nicht eintreten. Positiv wirkt sich aus, dass durch den sehr kurzen und sehr intensiven mechanischen Impuls Presslinge entlang den ursprünglichen Korngrenzen wieder in Späne zerfallen und auch hakenförmige Einzelspäne zerbrechen. Es entstehen daraus stäbchen- oder plättchenförmige Einzelspäne, die beträchtlich leichter zu separieren sind. Sehr lange und spiral- oder wendelähnliche Späne werden ebenfalls durch den mechanischen Impuls in stäbchen- oder plättchenförmige Einzelspäne zerkleinert. Bei einem ausreichend unterschiedlichen Bruchverhalten verschiedener Legierungen ist es möglich, die Späne der unterschiedlichen Legierungen mit unterschiedlichen Zerkleinerungsgraden zu zerkleinern, so dass durch eine Siebklassierung bereits eine Voranreicherung des einen oder des anderen Späne-Materials bewirkt werden kann. In günstigen Fällen ist eine vollständige Separation möglich. Die nicht brennbare Flüssigkeit verhindert bei der Prallzerkleinerung die Bildung explosibler Metallstäube und unterbindet eine Entzündung des Zerkleinerungsgutes, denn sie verhindert Funkenbildung oder und grenzt den Grad der Erwärmung des Zerkleinerungsguts infolge der Zerkleinerung ein. Dieses ist besonders bei leicht entzündlichen Materialien wie bei sehr feinen Magnesiumspänen relevant.

Eine vorteilhafte Ausgestaltung des Zerkleinerungsverfahrens erzielt man dadurch, dass man Wasser oder eine andere, nicht brennbare Flüssigkeit synchron mit dem Spänegemisch über einen gemeinsamen Eintrittsstutzen in die Zerkleinerungsmaschine einträgt und über einen gemeinsamen Auslass herausbefördert. Das flüssige Medium wirkt in diesem Falle als Transportmedium und ermöglicht in Kombination mit einem eingebauten Rost oder Sieb legierungsspezifisch sehr hohe Zerkleinerungsgrade einerseits, bei Metalllegierungen mit Sprödbruchverhalten und geringe Zerkleinerungsgrade andererseits bei duktilen Metalllegierungen. So können beispielsweise in einem Spänegemisch Späne aus Magnesiumlegierung quasi vollständig auf Längen bzw. Durchmesser von weniger als 1 mm zerkleinert werden, während Späne aus Aluminiumlegierung partiell und Eisenspäne vollständig unzerkleinert bleiben. Dieses wird im Beispiel 1 verdeutlicht. Ohne den synchronen Eintrag der Flüssigkeit, die zum Beispiel Wasser sein kann, werden diese hohen Unterschiede im Zerkleinerungsgrad nicht erzielt. Als sehr vorteilhaft hat sich dabei die Verwendung eines Stangensiebs am Austrag erwiesen.

Eine besonders vorteilhafte Ausgestaltung des Zerkleinerungsverfahrens erreicht man bei verpressten Spänen, wenn der Prallzerkleinerung eine Vor-Zerkleinerung in einem Backenbrecher vorausgeht und für die Prallzerkleinerung eine Mühle mit frei beweglichen Prallblechen oder Schlagkörpern verwendet wird. Je nach Anwendungsfall kann zur Vermeidung der Staubbildung der Backenbrecher ebenfalls mit Wasser oder einer nicht brennbaren Flüssigkeit beaufschlagt werden. Bereits nach der Vorzerkleinerung ist ein nicht zu vernachlässigender Anteil des Spänegemisches aufgeschlossen und kann durch eine Siebklassierung abgetrennt werden. Die Hammermühle wird anschließend nur noch mit dem Siebüberlauf beaufschlagt, wodurch neben der Maschinengröße, der Verschleiß und der bei der Zerkleinerung verursachte Lärm reduziert werden können.

Die Separationsaufgabe kann durch eine Dichtesortierung, bei magnetischen Materialien auch durch eine Magnetsortierung gelöst werden.

Als vorteilhaft hat sich für die Dichtesortierung die Verwendung eines Schüttelherdes, einer Wendelrutsche, einer Flotationszelle oder einer Setzmaschine erwiesen.

Als besonders vorteilhaft hat sich zur Separation von Magnesiumlegierungen in einer Flotationszelle oder einer Setzmaschine die Verwendung leicht saurewässriger Lösungen wiz. B eine 1 %-ige Salzsäure oder eine 5-10 %-ige MgCl₂-Lösung erwiesen. Diese sauren Medien bewirken bei Spänen aus Magnesiumlegierung die Bildung von Gasblasen, die an den Spänen haften und für einen besseren Auftrieb sorgen. Späne aus Metalllegierungen mit edlerem Charakter und auch Aluminiumlegierungen werden nicht oder nur sehr wenig durch diese Lösungen angegriffen, so dass dadurch die Abtrennung von Magnesiumlegierungen von den Metalllegierungen mit höherer Dichte unterstützt wird.

Bei Wendelrutschen und bei Schüttelherden hat es sich als günstig erwiesen vorher eine Korngrößenklassierung durchzuführen und jeweils mit einzelnen Korngrößenklasse mit einer begrenzten Spannweite die Separation durchzuführen. Es ist aber auch möglich eine Separation ohne vorherige Korngrößenklassierung durchzuführen. Bei nicht hinreichender Trennschärfe sind eine oder mehrere zusätzliche Mittelfraktionen zu erzeugen, die erneut auf einen Schüttelherd oder eine Wendelrutsche aufgegeben werden.

Mit der erfindungsgemäßen Verfahrensweise sind auch Magnesium- und Aluminiumlegierungen trotz relativ geringer Dichteunterschiede vollständig voneinander separierbar. Eisenlegierungen lassen sich entsprechend auch mit magnetischen Verfahren separieren.

### Beispiele

### Beispiel 1

1 kg eines Gemisches mit 30% Spänen aus Magnesiumlegierung, 59 % Spänen aus Aluminiumlegierung und 11 % Spänen aus Eisenlegierung, die folgende Summe der Siebdurchgänge aufweist:

| | |
|---|---|
| < 4 mm | 100,0% |
| < 1 mm | 47,5 % |
| < 0,5 mm | 16,9 % |

und die ohne vorherige Zerkleinerung folgende Zusammensetzung in den einzelnen Fraktionen besitzt:

| | | | | |
|---|---|---|---|---|
| > 1 mm | Massenkonzentration 52,5 %, | Mg: 18 % | Al: 63 % | Fe:19 % |
| 0,5-1 mm | Massenkonzentration 30,6 % | Mg: 43 % | Al: 57 % | Fe: 0 % |
| < 0,5 mm | Massenkonzentration 16,9 %, | Mg: 47 % | Al: 53 % | Fe: 0 % |

wird synchron mit 10 kg Wasser in eine Hammermühle mit Rostaustrag (Spaltweite 0,8 mm) eingetragen und nass zerkleinert. Danach erfolgt eine Klassierung in folgende Korngrößenfraktionen die folgende Massenkonzentrationen an Magnesium-, Aluminium- und Eisenspänen aufweisen:

| | | | | |
|---|---|---|---|---|
| > 1 mm | Massenkonzentration 35,6 %, | Mg: 3 % | Al: 69 % | Fe:28 % |
| 0,5-1 mm | Massenkonzentration 39,8 %, | Mg: 46 % | Al: 54 % | Fe: 0 % |
| < 0,5 mm | Massenkonzentration 24,6 %, | Mg: 45 % | Al: 55 % | Fe: 0 % |

Späne aus Eisen- und Aluminiumlegierung werden in der Fraktion > 1 mm angereichert.

### Beispiel 2

10 kg zylindrische Presslinge eines Gemischs mit 30% Spänen aus Magnesiumlegierung, 59 % Spänen aus Aluminiumlegierung, und 11 % Spänen aus Eisenlegierung, mit einem Druchmesser von 90 mm und einer Höhe von 120 mm werden zuerst in einen Backenbrecher eingetragen und das vor-zerkleinerte Gut anschließend durch Siebklassierung in eine Fraktion < 2 mm und eine Fraktion > 2mm unterteilt. Dabei werden 5,6 kg noch zusammenhängende Metallspäne > 2 mm und 4,4 kg in Einzelspäne aufgeschlossenes Material < 2 mm erhalten. Die noch zusammenhängenden Späne > 2 mm werden synchron mit 50 Liter Wasser in die Nasshammermühle eingetragen, das zerkleinerte Gut dekantiert und getrocknet. Das getrocknete Zerkleinerungsgut und das bereits mit dem Backenbrecher auf < 2 mm zerkleinerte Material werden vereinigt und zur Überprüfung des Aufschlussgrades mittels Siebung in verschiedene Korngrößenklassen unterteilt, diese separat in eine inerte Flüssigkeit mit einer Dichte von 1,85 g/cm³ gegeben, wobei aufschwimmendes Material von sedimentiertem Material getrennt wurde. Einzelspäne mit einer Dichte < 1,85 g/cm³ sind wie folgt auf die einzelnen Korngrößenklassen verteilt.

| Korngröße | Massenanteil | Späne mit D < 1,85 g/cm³ |
|---|---|---|
| [mm] | [Gew.-%] | [Gew.-%] |
| >4 mm | 4,5 | 0,6 |
| 4 - 2 mm | 23 | 3,1 |
| 2 - 1 | 28,3 | 3,9 |
| 1 - 0,5 mm | 21 | 5,3 |
| < 0,5 mm | 23,2 | 16,7 |
| gesamt | 100 | 29,7 |

Die gemessene Verteilung der Einzelspäne stimmt innerhalb von 1,5 % mit dem Anteil der Späne aus Magnesiumlegierung überein. Das Material ist quasi vollständig aufgeschlossen. Zur Separation wurde das vereinigte Material in die Korngrößenklassen < 0,5 mm, 0,5-1 mm und > 1 mm unterteilt und diese Fraktionen einzeln synchron mit 10 Liter Wasser pro 1 kg Späne auf einem Schüttelherd gegeben. Man erzielt eine quasi vollständige Separation in Magnesiumspäne und ein Gemisch aus Aluminium- und Eisenspänen.

### Beispiel 3

10 kg zylindrische Presslinge eines Gemischs mit 70% Spänen aus Magnesiumlegierung und 30 % Spänen aus Eisenlegierung, mit einem Durchmesser von 60 mm und einer Höhe von 90 mm werden zuerst in einen Backenbrecher eingetragen und das vor-zerkleinerte Gut anschließend durch Siebklassierung in eine Fraktion < 2 mm und eine Fraktion > 2 mm unterteilt. Dabei werden 4,2 kg noch agglomerierte Metallspäne > 2 mm und 5,8 kg in Einzelspäne aufgeschlossenes Material < 2 mm erhalten. Die agglomerierten Späne > 2 mm werden synchron mit 50 Liter Wasser in die Nasshammermühle eingetragen, das zerkleinerte Gut dekantiert und getrocknet. Das getrocknete Zerkleinerungsgut und das bereits mit dem Backenbrecher auf < 2 mm zerkleinerte Material wurden vereinigt und zur Überprüfung des Aufschlussgrades mittels Siebung in verschiedene Korngrößenklassen unterteilt, diese separat in eine innerte Flüssigkeit mit einer Dichte von 1,85 g/cm³ gegeben, wobei aufschwimmendes Material von sedimentiertem Material getrennt wurde. Einzelspäne mit einer Dichte < 1,85 g/cm³ sind wie folgt auf die einzelnen Korngrößenklassen verteilt.

| Korngröße | Massenanteil | Späne mit D < 1,85 g/cm³ |
|---|---|---|
| [mm] | [Gew.-%] | [Gew.-%] |
| > 4 mm | 4,5 | 1,1 |
| 4 - 2 mm | 23 | 2,3 |
| 2 - 1 mm | 28,3 | 8,6 |
| 1 - 0,5 mm | 21 | 24,3 |
| < 0,5 mm | 23,2 | 32,5 |
| gesamt | 100 | 68,9 |

Die gemessene Verteilung der Einzelspäne stimmt innerhalb von 1,5 % mit dem Anteil der Späne aus Magnesiumlegierung überein. Das Material ist quasi vollständig aufgeschlossen. Zur Separation von Eisen wird mit einem Schwachfeldmagneten die ferromagnetische Fraktion abgetrennt.

## Patentansprüche

1. Zerkleinerungsverfahren für Späne oder Spänegemische sowie Presslinge aus Spänen aus Metallen oder Metalllegierungen, vorzugsweise Leichtmetalllegierungen, **dadurch gekennzeichnet, dass** das zu zerkleinernde Material in Gegenwart einer nicht brennbaren Flüssigkeit, vorzugsweise Wasser oder eine wässrige Lösung in einem Prallzerkleinerer, vorzugsweise einer Hammermühle zerkleinert wird.

2. Verfahren nach Anspruch 1, **dadurch gekennzeichnet, dass** unter Verwendung eines Rostaustrages in einer Hammermühle der Zerkleinerungsgrad unterschiedlicher Metalle oder Metalllegierungen so unterschiedlich ist, dass man mit einer nachfolgenden Siebklassierung eine vollständige oder partielle Trennung der Metalle oder Metalllegierungen bewirkt.

3. Verfahren nach Anspruch 3, **dadurch gekennzeichnet, dass** ein vollständiges Zerfallen der Presslinge in Einzelspäne bewirkt wird und von dem überwiegenden Anteil der so erzeugten Einzelspäne jeder einzelne Span einheitlich aus einem Material besteht.

4. Verfahren nach Anspruch 3, **dadurch gekennzeichnet, dass** die nicht brennbare Flüssigkeit synchron mit dem zu zerkleinernden Gut am Eintrag in den Prallzerkleinerer Prallzerkleinerer eingetragen werden und **dadurch** Staubbildung, Funkenbildung und Entzündung der Metallspäne vermieden wird.

5. Verfahren nach Anspruch 3, **dadurch gekennzeichnet, dass** die Presslinge in einem Backenbrecher vor-zerkleinert, das vor-zerkleinerte Gut gesiebt und der Siebrückstand in den Prallzerkleinerer eingespeist und in Gegenwart einer nicht brennbaren Flüssigkeit, vorzugsweise Wasser oder eine wässrige Lösung, deren Einspeisung vorzugsweise synchron mit dem zu zerkleinernden Gut am Materialeintrag des Prallzerkleinerers erfolgt, zerkleinert und **dadurch** neben dem Materialaufschluss, der Vermeidung von Staubbildung, Funkenbildung und Entzündung der Metallspäne auch eine Reduktion des Maschinenverschleißes und der Geräuschentwicklung bewirkt wird.

6. Verfahren nach Anspruch 5, **dadurch gekennzeichnet, dass** die Aufgabe der Presslinge auf einen Backenbrecher synchron mit einer nicht brennbaren Flüssigkeit erfolgt und **dadurch** Staubbildung bei der Zerkleinerung im Backenbrecher vermieden wird.

7. Verfahren nach einem der Ansprüche 1 bis 7 **dadurch gekennzeichnet, dass** das zerkleinerte Gut nach bekannten Prinzipien der Dichtesortierung klassiert wird.

8. Verfahren nach einem der Ansprüche 1 bis 7 **dadurch gekennzeichnet, dass** das zerkleinerte Gut nach bekannten Prinzipien der Magnetsortierung klassiert wird.

9. Verfahren zur Separierung von Spänen aus unedlen Metalllegierungen, vorzugsweise Magnesiumlegierungen, **dadurch gekennzeichnet, dass** das hinreichend aufgeschlossene Spänegemische in eine Flotationszelle eingetragen, als Tragmedium eine verdünnte Mineralsäure mit 0,5-5%, vorzugsweise 1 % Mineralsäure oder eine verdünnte Mineralsalzlösung, vorzugsweise eine Lösung mit 5-10 % MgCl₂ verwendet werden, so dass und unter Eintragen von Luft in die Flotationszelle sowie unter kontinuierlichem Rühren des Gemisches aus Spänen verschiedener Legierungen und Traglösung die Späne, die aus den besagten Legierungen bestehen, zusammen mit den eingetragenen Luft- und den gebildeten Wasserstoffblasen aufschwimmen und damit eine legierungsspezifische Separation bewirkt wird.

10. Verfahren nach einem der Ansprüche 1 bis 9, **dadurch gekennzeichnet, dass** die Späne oder Spänegemische eines oder mehrere Metalle der Gruppe Kupfer, Silizium, Mangan, Nickel, Kobalt, Vanadium, Chrom, Molybdän, Titan, Zirkonium vorzugsweise der Gruppe Eisen, Aluminium und Magnesium in Massenanteilen von mehr als 1 von 100 enthalten.

11. Verfahren nach einem der Ansprüche 3 bis 9, **dadurch gekennzeichnet, dass** die Presslinge aus Spänen oder Spänegemischen zusammengesetzt sind, die eines oder mehrere Metalle der Gruppe Kupfer, Silizium, Mangan, Nickel, Kobalt, Vanadium, Chrom, Molybdän, Titan, Zirkonium vorzugsweise der Gruppe Eisen, Aluminium und Magnesium in Massenanteilen von mehr als 1 von 100 enthalten.
